# EUROPÄISCHE PATENTSCHRIFT

(11) **EP 3 402 998 B1**
(45) Veröffentlichungstag und Bekanntmachung des Hinweises auf die Patenterteilung: **09.03.2022**
(21) Anmeldenummer: 17700805.9
(22) Anmeldetag: 12.01.2017
(51) Int. Cl.: F16D 65/092, F16D 69/04

(54) **BREMSBELAG FÜR SCHEIBENBREMSEN VON SCHIENENFAHRZEUGEN**
BRAKE LINING FOR DISC BRAKES OF RAIL VEHICLES
GARNITURE DE FREIN POUR FREINS À DISQUE DE VÉHICULES FERROVIAIRE

(30) Priorität: 13.01.2016 DE 102016100454
(43) Veröffentlichungstag der Anmeldung: 21.11.2018
(73) Patentinhaber: KNORR-BREMSE Systeme für Schienenfahrzeuge GmbH, 80809 München (DE)
(72) Erfinder: ELSTORPFF, Marc-Gregory, 80638 München (DE); MATHIEU, Michael, 82178 Puchheim (DE); LANG, Rupert, 92287 Schmidmühlen (DE); HUBER, Jörg, 81243 München (DE); FUDERER, Erich, 82256 Fürstenfeldbruck (DE); HÄMMERL, Bernhard, 82216 Maisach (DE); SEIDL, Markus, 85774 Unterföhring (DE); LANGWADT, Marco, 80992 München (DE)
(86) Internationale Anmeldenummer: PCT/EP2017/050603
(87) Internationale Veröffentlichungsnummer: WO 2017/121821

(56) Entgegenhaltungen:
- DE-A1- 19 840 065
- DE-U1-202011 001 991
- FR-A1- 2 689 195
- GB-A- 1 089 955

## Beschreibung

Die vorliegende Erfindung bezieht sich auf einen Bremsbelag für eine Scheibenbremse und insbesondere auf einen Bremsbelag für eine Scheibenbremse von Schienenfahrzeugen mit verbesserten Eigenschaften bei Nässe und Eis.

Bremsbeläge, wie sie beispielsweise bei Schienenfahrzeugscheibenbremsen genutzt werden, weisen bei energiereichen Bremsvorgängen häufig keinen annähernd konstanten Wärmeeintrag in die Bremsscheibe auf. Ein verbesserter Bremsbelag wurde in EP 0 784 761 B1 vorgeschlagen, bei dem eine Aufteilung der Gesamtbelagfläche in mehrere kleine Elemente vorgenommen wird. Der offenbarte Bremsbeleg verbessert eine Übertragung der Zuspannkraft vom Zangenhebel auf die Belagelemente, um so einen gleichmäßiger Wärmeeintrag zu erzielen. Dies wird dadurch erreicht, dass die Zangenhebelkraft vom Belaghalter gleichmäßig auf die obere und untere Hälfte des elastisch verformbaren Belagträgers aufgeteilt wird. Bei dem genannten flexiblen Bremsbelag wird außerdem die Kraft auf eine Hälfte des Belagträgers jeweils über drei Trägerbleche (Rippen) abgestützt, die über ein Kugel-Kalotten-Gelenk mit einem Belagträger gekoppelt sind, wodurch alle Trägerbleche gleichmäßig belastet werden (ISOBAR-Prinzip). Jedes Trägerblech teilt wiederum die Kraft gleichmäßig auf die drei Belagelemente auf, welche ebenfalls über ein Kugel-Kalotten-Gelenk mit einem Trägerblech gekoppelt sind. Die Unterbaugruppe, die aus einem Trägerblech und den darauf gelagerten Belagelementen besteht, wird ebenfalls als Gruppenelement bezeichnet.

Weitere flexible Bremsbeläge sind in der DE 10 2005 030 619 B4 oder in der DE 20 2011 001 991 U1 offenbart, bei der die Belagelemente mittels eines Kugel-Kalotten-Gelenks direkt auf einem Belagträger gelagert sind (als sogenannter Flexpad). Die Belagelemente können sich dadurch parallel zur Oberfläche der Bremsscheibe ausrichten. Allerdings ist die Verteilung der Zuspannkraft nicht mehr so optimal, wie bei der zuvor beschriebenen Belagvariante, die einen gleichmäßigeren Wärmeeintrag ermöglicht. Hierdurch ergeben sich Nachteile für Hochgeschwindigkeitszüge, die einen möglichst gleichmäßigen Wärmeeintrag in die Bremsscheibe erfordern.

Diese flexiblen Bremsbeläge weisen auch einen gleichmäßigen Reibwert (ca. 0,35) zwischen Bremsbelag und Bremsscheibe bei unterschiedlichen Bremsanforderungen auf. Ausnahmen sind hier aber Bremsungen bei Nässe und Eis. Diese sind für alle Bremsungen generell problematisch, weil der Reibwert zwischen Bremsbelag und Bremsscheibe in der Regel absinkt. Dieses Verhalten wird auch in den entsprechenden Richtlinien durch niedrigere zulässige Reibwerte (> 0,25) bei Bremsungen bei Nässe berücksichtigt. Insbesondere aber beim Vorhandensein von Eis auf der Bremsscheibe können extrem niedrige Reibwerte (< 0,1) den Bremsweg unzulässig verlängern. Die genannten flexiblen Bremsbeläge zeigen hier eine schlechtere Bremswirkung bei Nässe und Eis als sogenannte "starre" Bremsbeläge.

Damit gibt es jetzt einen Konflikt zwischen der Forderung nach einem möglichst gleichmäßigen Wärmeeintrag vom Bremsbelag in die Bremsscheibe durch hohe Flexibilität des Bremsbelages und der Forderung nach möglichst gleichmäßigen Bremsverhalten unter allen Betriebsbedingungen insbesondere auch bei Nässe und Eis und es besteht ein Bedarf nach alternativen Bremsbelägen, die diesen Anforderungen genügen.

Das Dokument GB 1089955 A offenbart Reibelemente für eine Scheibenbremse, die einen äußeren ringförmigen Randbereich und einen zentral angeordneten kreisförmigen Bereich, der über eine Feder vertikal beweglich ist, umfassen.

Die obengenannte technische Aufgabe wird durch einen Bremsbelag nach Anspruch 1 gelöst. Die abhängigen Ansprüche beziehen sich auf vorteilhafte Weiterbildungen des Bremsbelages, der im Anspruch 1 definiert ist.

Die Erfindung betrifft einen teil-flexiblen Bremsbelag für eine Scheibenbremse, wobei der Bremsbelag eine Verteilung von Belagelementen aufweist, die gruppenweise an Gruppenträgern angeordnet sind, wobei die Gruppenträger an dem Belagträger befestigt sind (ähnlich dem ISOBAR-Prinzip), oder die direkt am Belagträger befestigt sind (ähnlich dem Flexpad). Die Belagelemente umfassen mehrere erste Belagelemente und zweite Belagelemente. Die Gruppenträger umfassen einen ersten Gruppenträger und einen zweiten Gruppenträger, wobei die ersten Belagelemente kippfest und unflexibel (d.h. sie lassen sich nicht kippen und sind auch weitgehend starr verbunden) an dem ersten Gruppenträger oder am Belagträger angeordnet sind und die zweiten Belagelemente kippbar und flexibel (d.h. sie lassen sich kippen und ggf. auch verschieben) an dem zweiten Gruppenträger oder am Belagträger angeordnet sind.

Der Begriff "kippbar" bezieht sich auf eine relative Verkippung zwischen der Bremsscheibe der Scheibenbremse und der Oberfläche des Bremsbelages. Beim Bremsvorgang sind diese beiden Oberflächen idealerweise parallel ausgerichtet, so dass eine Verkippung zu einer nichtparallelen Ausrichtung des Bremsbelages und der Scheibe der Scheibenbremse führt. Andererseits führt das Verkippen auch dazu, dass bei einer nicht-parallelen Ausrichtung der genannten Oberflächen, diese sich automatisch parallel ausrichten.

Der begriff flexibel bezieht sich auf eine relative Verschiebung zwischen der Bremsscheibe der Scheibenbremse und der Oberfläche des Bremsbelages. Beim Bremsvorgang ermöglicht eine flexible Anbindung eine Verschiebung des Belagelements senkrecht zur Fläche der Bremsscheibe und damit einen Ausgleich der Flächenpressungen.

Die Gruppenträger, die Belagelemente und der Belagträger sind separate Komponenten, wobei die Gruppenträger beispielsweise beweglich an dem Belagträger befestigt sein können.

Ausführungsbeispiele lösen die obengenannte technische Aufgabe dadurch, dass der Bremsbelag Belagelemente mit und Belagelemente ohne eine gelenkartige Lagerung relativ zu dem Belagträger oder zu den Trägerblechen (Gruppenträger) nutzt. Versuche haben ergeben, dass die starr-gekoppelten Belagelemente bei Nässe und Vereisung zu einer verbesserten Bremskraft führen.

Bei weiteren Ausführungsbeispielen ist der erste Gruppenträger an einer Endposition des Belagträgers befestigt, wobei von allen Positionen der Gruppenträger auf dem Belagträger die Endposition eine erste oder letzte Position auf dem Belagträger darstellt, und zwar bezüglich einer relativen Bewegung zwischen einer Bremsscheibe der Scheibenbremse und dem Bremsbelag. Optional kann eines der ersten Belagelemente an einer Endposition direkt an dem Belagträger befestigt sein. Insbesondere wenn keine Gruppenträger vorhanden sind, kann dies der Fall sein. Die "Endposition" ist dabei so zu verstehen, dass bei der relativen Bewegung zwischen der Bremsscheibe und des Bremsbelages die entsprechenden Belagelemente (z.B. auf dem jeweiligen Gruppenträger) zuerst oder zuletzt mit einer bestimmten Position auf der Bremsscheibe in Kontakt geraten. Alle Positionen von Komponenten wie beispielsweise der Belagelemente können als Orte des Massenschwerpunktes der jeweiligen Komponente verstanden werden.

Bei weiteren Ausführungsbeispielen weisen die Belagelemente dritte Belagelemente und die Gruppenträger einen dritten Gruppenträger auf, wobei die dritten Belagelemente kippfest an dem dritten Gruppenträger angeordnet sind und der dritte Gruppenträger an einer weiteren Endposition des Belagträgers, die der Endposition gegenüber liegt, angeordnet ist. Optional weisen die Belagelemente ein drittes Belagelement auf, das an einer weiteren Endposition direkt an dem Belagträger befestigt ist. Insbesondere wenn keine Gruppenträger vorhanden sind, kann dies der Fall sein.

Somit sind bezüglich der relativen Bewegungsrichtung zwischen der Bremsscheibe und den Belagelementen alle weiteren Belagelemente zwischen den Belagelementen der ersten Gruppe und den Belagelementen der dritten Gruppe angeordnet oder zwischen dem ersten und dem dritten Belagelement, wenn diese Belagelemente direkt auf dem Belagträger befestigt sind. Die Position der Belagelemente oder der Gruppenträger werden erfindungsgemäß kann wiederum über die Position ihrer Masseschwerpunkte eindeutig einer Position auf dem Belagträger zugeordnet.

Außerdem kann die Position als eine Winkelposition zu einer Drehachse der Bremsscheibe definiert werden, so dass jedem Belagelement eine bestimmte Winkelposition in Bezug auf die Bremsscheibe zugeordnet werden kann. Die Anordnungsreihenfolge kann somit bezüglich der Winkelposition eindeutig festgelegt werden.

Bei weiteren Ausführungsbeispielen ist zwischen den/dem zweiten Belagelement(en) und dem zweiten Gruppenträger oder dem Belagträger ein Spalt ausgebildet, um ein Verkippen der zweiten Belagelemente zu ermöglichen. Die Spaltbreite des Spaltes definiert ein Maß an möglicher Verkippung. Wenn die Spaltbreite gleich Null ist oder die Spaltbreite sich nicht ändern lässt (z.B. durch Abstandshalter), wird von einer kippfesten Halterung gesprochen.

Bei weiteren Ausführungsbeispielen ist zumindest ein Belagelement auf dem jeweiligen Gruppenträger (oder auf dem Belagträger) oder alle Belagelemente auf den jeweiligen Gruppenträgern (oder auf dem Belagträger) kippfest oder kippbar angeordnet. Beispielsweise können die ersten Belagelemente spaltfrei (d.h. es ist kein Spalt dazwischen ausgebildet) auf dem ersten Gruppenträger liegen, um so ein Verkippen zu verhindern.

Bei weiteren Ausführungsbeispielen ist der erste, zweite und dritte Gruppenträger Teil einer Vielzahl von Gruppenträgern, von denen zumindest ein (oder alle) Gruppenträger kippfest auf dem Belagträger befestigt sind. Optional kann einer oder mehrere Gruppentäger auch kippbar auf dem Belagträger befestigt sein.

Bei weiteren Ausführungsbeispielen sind alle Belagelemente einer Gruppe von Belagelementen kippfest auf dem jeweiligen Gruppenträger angeordnet sind. Sie können aber auch kippbar sein.

Bei weiteren Ausführungsbeispielen sind die Belagelemente auf den jeweiligen Gruppenträgern oder auf dem Belagträger drehbar und/oder die Gruppenträger sind drehbar auf dem Belagträger angeordnet. Beispielsweise sind zumindest die kippbaren Belagelemente drehbar auf dem jeweiligen Gruppenträger angeordnet.

Bei weiteren Ausführungsbeispielen sind die Belagelemente drehfest auf dem jeweiligen Gruppenträgern oder dem Belagträger angeordnet.

Bei weiteren Ausführungsbeispielen sind die Belagelemente als Vielecke ausgebildet, wobei zumindest ein Teil der Belagelemente mit ihren Seitenkanten aneinander stoßen, um dadurch ein Verdrehen zu verhindern oder zu begrenzen. Eine Möglichkeit, die Belagelemente drehfest auf dem jeweiligen Gruppenträger anzuordnen, besteht darin, die Belagelemente in Form eines n-Eckes auszubilden, so dass die jeweiligen Seitenflächen der n-Ecke aneinanderstoßen und somit ein Verdrehen der Belagelemente verhindert wird. Die n-eckförmig ausgestalteten Belagelemente können beispielsweise als Dreiecke, Vierecke, Fünfecke, Sechsecke oder als beliebige andere geometrische Form gebildet sein. Optional kann ein Spalt zwischen den Seitenkanten eine begrenzte Drehung erlauben.

Bei weiteren Ausführungsbeispielen sind zumindest ein Teil der Belagelemente über Kugelgelenke an den jeweiligen Gruppenträgern oder an dem Belagträger befestigt. Außerdem kann zumindest ein Teil der Gruppenträger über Kugelgelenke an dem Belagträger befestigt sein. Die Kugelgelenke können eine Verdrehung um eine Drehachse und/oder ein Kippen bezüglich der Drehachsen erlauben, wobei die Drehachse senkrecht auf der Verteilung der Belagelemente steht. Beispielsweise kann zwischen dem Belagträger und dem Trägerblech (Gruppenträger) ein Kugel-Kalotte-Gelenk ausgebildet sein, um ein Verkippen/Verdrehen zu ermöglichen.

Bei weiteren Ausführungsbeispielen sind die Belagelemente mittels Federn elastisch gegenüber den jeweiligen Gruppenträgern oder dem Belagträger vorgespannt.

Bei weiteren Ausführungsbeispielen weisen die Belagelemente jeweils ein Befestigungselement auf, das einen Kugel-Kalotten-förmigen Abschnitt umfasst, um ein kugelgelenkförmige Verbindung zu den jeweiligen Gruppenträger oder dem Belagträger bereitzustellen. Die Befestigungselemente weisen beispielsweise ein Metall und die Belagelemente ein Nichtmetall (mit besonders hoher Reibung zur Bremsscheibe) auf. Die kugelkallottenförmigen Gelenke ermöglichen beispielsweise Verdrehungen und/oder Verkippungen der Belagelemente (z.B. in beliebigen Richtungen).

Bei weiteren Ausführungsbeispielen umfassen die ersten und/oder dritten Belagelemente ein anderes Reibmaterial (oder sind aus einem anderen Reibmaterial), als die zweiten Belagelemente.

Weitere vorteilhafte Ausführungsformen umfassen die starr-gelagerten Belagelemente in den Gruppenelementen an den Enden des Bremsbelages. Bei weiteren Ausführungsformen werden nicht nur die Belagelemente von einzelnen Gruppenelementen auf dem Trägerblech (Gruppenträger) starr angebunden, sondern auch der jeweilige Gruppenträger wird auf dem Belagträger (z.B. an den Enden) starr befestigt. Durch die Kombination von gelenkig gelagerten und starr angebundenen Belagelementen, ermöglichen Ausführungsbeispiele außerdem ein gutes Tragbild und ein gutes Nässeverhalten.

Die vorliegende Erfindung bezieht sich auch auf eine Scheibenbremse mit einem der zuvor beschriebenen Bremsbeläge. Außerdem betrifft die vorliegende Erfindung auch ein Schienenfahrzeug mit der genannten Scheibenbremse.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine schematische Teildarstellung für einen Bremsbelag gemäß einem Ausführungsbeispiel der vorliegenden Erfindung.
- Fig. 2: zeigt eine Raumansicht eines Bremsbelags gemäß Ausführungsbeispielen.
- Fig. 3: zeigt eine Draufsicht auf eine Bremsoberfläche des Bremsbelags der Fig. 2.
- Fig. 4: zeigt eine Querschnittsansicht entlang des Querschnittes A-A aus der Fig. 3.
- Fig. 5: zeigt eine Raumansicht eines Bremsbelags ohne Gruppenträger gemäß weiteren Ausführungsbeispielen.
- Fig. 6: zeigt eine Ansicht auf die Unterseite des Belagträgers aus der Fig. 5.
- Fig. 7: zeigt eine Querschnittsansicht entlang der Querschnittslinie D - D aus der Fig. 6.
- Fig. 8: zeigt eine Querschnittsansicht entlang der Querschnittslinie E - E aus der Fig. 6.

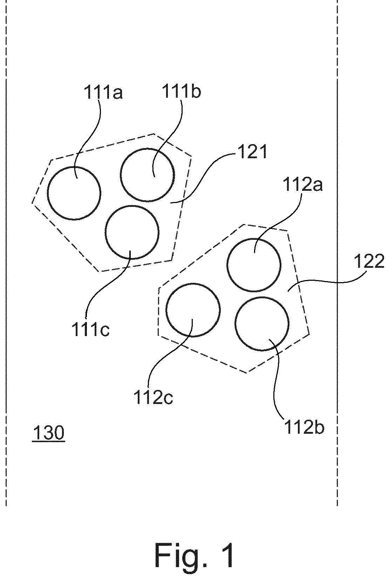

**Fig. 1** zeigt einen Bremsbelag für eine Scheibenbremse, der eine Verteilung von Belagelementen 111, 112, .... umfasst, die gruppenweise an Gruppenträgern 121, 122, ... angeordnet sind. Die Gruppenträger 121, 122, ... sind an dem Belagträger 130 befestigt. Die Belagelemente 111, 112, ... weisen erste Belagelemente 111 und zweite Belagelement 112 auf und die Gruppenträger 121, 122, ... weisen einen ersten Gruppenträger 121 und einen zweiten Gruppenträger 122 auf, wobei die ersten Belagelemente 111 kippfest an dem ersten Gruppenträger 121 angeordnet sind und die zweiten Belagelemente 112 kippbar an dem zweiten Gruppenträger 122 angeordnet sind. Die ersten Belagelemente 111 bilden beispielsweise eine erste Gruppe und die zweiten Belagelemente 112 bilden beispielsweise eine zweite Gruppe. Alle weiteren Belagelemente sind analog gruppenweise zusammengefasst.

Die Begriffe "kippen" oder "kippbar" beziehen sich auf eine (teilweise) Drehung um eine Drehachse, die in der flächenförmigen Ausdehnung des Bremsbelages bzw. des Belagträgers 130 liegt.

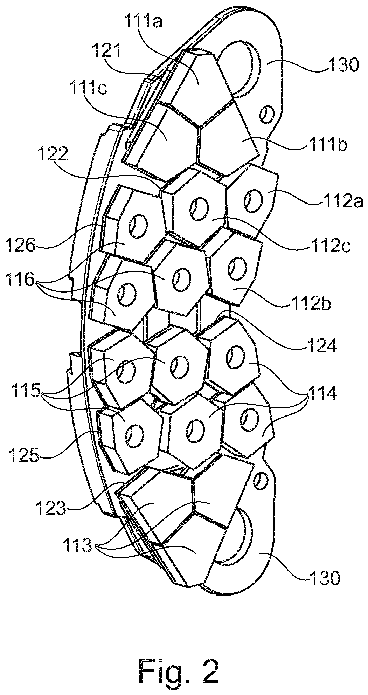

**Fig. 2** zeigt eine Raumansicht für einen Bremsbelag gemäß einem weiteren Ausführungsbeispiel. Der Bremsbelag umfasst insgesamt sechs Gruppen 111, ..., 116 von Belagelementen, die auf dem Belagträger 130 angeordnet sind. Jede Gruppe weist drei Belagelemente auf, wobei die erste Gruppe 111 mit den drei Belagelementen 111a, 111b, 111c an einem Ende des Belagträgers 130 angeordnet ist und eine dritte Gruppe 113 von Belagelementen an einem gegenüberliegenden Ende des Belagträgers 130 angeordnet ist. Die Enden des Belagträgers 130 sind beispielsweise dadurch definiert, dass sie am Anfang und Ende bezüglich einer relativen Bewegung zwischen dem Bremsbelag und einer Bremsscheibe (in der Fig. 2 nicht zu sehen) angeordnet sind.

Alle weiteren Gruppen sind zwischen der ersten Gruppe 111 und der dritten Gruppe 113 von Belagelementen angeordnet. Beispielsweise sind die zweite Gruppe 112 mit den drei Belagelementen 112a, 112b, 112c und die vierte Gruppe 114 von Belagelementen zwischen der ersten Gruppe 111 und der dritten Gruppe 113 angeordnet. Ebenso sind die fünfte Gruppe 115 und die sechste Gruppe 116 zwischen der ersten Gruppe 111 und der dritten Gruppe 113 angeordnet. Die zweite Gruppe 112 ist beispielsweise lateral neben der sechsten Gruppe 116 und die vierte Gruppe 114 lateral neben der fünften Gruppe 115 angeordnet, wobei sich diese Lage wiederum auf die relative Bewegungsrichtung zwischen dem Bremsbelag und der Bremsscheibe bezieht. Die gezeigte Anordnung stellt jedoch nur eine mögliche Realisierung dar. Bei weiteren Ausführungsbeispielen kann die Anordnung der Belagelemente auch anders sein.

Jede Gruppe von Belagelementen wird jeweils durch einen Gruppenträger 121, 122, ... auf dem Belagträger 130 fixiert. Der ersten Gruppe 111 ist ein erster Gruppenträger 121, der zweiten Gruppe 112 ist ein zweiter Gruppenträger 122, der dritten Gruppe 113 ist ein dritter Gruppenträger 123, der vierten Gruppe 114 ist ein vierter Gruppenträger 124, der fünften Gruppe 115 ist ein fünfter Gruppenträger 125 und der sechsten Gruppe 116 ist ein sechster Gruppenträger 126 zugeordnet. Die erste Gruppe 111 von Belagelementen ist starr oder fest auf dem ersten Gruppenträger 121 befestigt, wobei die entsprechenden drei Belagelemente höchstens drehbar, jedoch nicht kippbar sind. Die dritte Gruppe 113 ist ebenfalls starr auf dem dritten Gruppenträger 123 fixiert, wobei die entsprechenden drei Belagelemente höchstens drehbar, jedoch nicht kippbar sind. Die weiteren Belagelemente aus der zweiten Gruppe 112, der vierten Gruppe 114, der fünften Gruppe 115 und der sechsten Gruppe 116 sind beispielsweise kippbar auf den entsprechenden Gruppenträger 122, 124, 125, 126 angeordnet. Die einzelnen Gruppenträger 121, ..., 126 können ebenfalls kippbar auf dem Belagträger 130 fixiert sein, so dass sich die erste Gruppe 111 von Belagelementen zusammen mit dem ersten Gruppenträger 121 auf dem Belagträger 130 kippend bewegen kann. Das Gleiche trifft für die dritte Gruppe 113 von Belagelementen zu, die ebenfalls in Bezug auf den Belagträger 130 kippbar sein können.

Die Belagelemente 111, ..., 116 sind beispielhaft fünfeckig ausgebildet, wobei die einzelnen Seitenflächen der Fünfecke sich berühren können, nicht jedoch berühren müssen. Beispielsweise sind die Belagelemente der ersten Gruppe 111 derart benachbart, mit den Seitenflächen aneinandergrenzend angeordnet, dass eine relative Drehung zwischen den Belagelementen verhindert wird. Gleiches trifft zu für die Belagelemente der dritten Gruppe 113. Alle weiteren Belagelemente der zweiten Gruppe 112, der vierten Gruppe 114, der fünften Gruppe 115 und der sechsten Gruppe 116 können beispielsweise teilweise drehbar sein (z.B. um eine Drehachse, die senkrecht auf der Bremsfläche steht). Die Drehung aller Belagelemente kann jedoch zumindest teilweise dadurch eingeschränkt oder unterdrückt sein, dass Seitenflächen der beispielhaft fünfeckig ausgebildeten Belagelemente aneinandergrenzen und ein Spalt dazwischen nur eine begrenzte Drehung der Belagelemente ermöglicht.

Bei weiteren Ausführungsbeispielen können die Belagelemente ebenfalls kreisförmig ausgebildet sein oder eine andere n-eckige Form (z.B. dreieckig, viereckig, fünfeckig, sechseckig, ...) aufweisen, d.h. die Erfindung ist nicht auf den gezeigten beispielhaften fünfeckigen Belagelementen eingeschränkt.

Bei weiteren Ausführungsbeispielen sind jedoch ein Teil oder alle Belagelemente 111, ... , 116 zumindest bis zu einem gewissen Grad drehbar an dem jeweiligen Gruppenträger befestigt. Außerdem können alle oder ein Teil der Gruppenträger 121, 122, ... drehbar an dem Belagträger 130 befestigt sein.

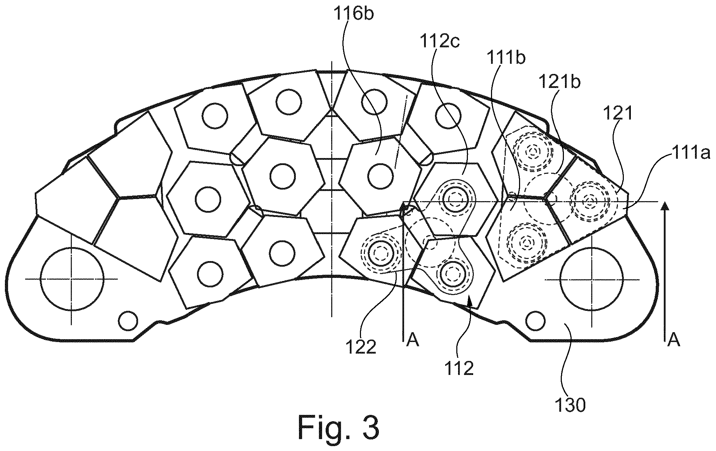

**Fig. 3** zeigt eine Draufsicht auf dem Bremsbelag aus der Fig. 2. In dieser Draufsicht sind die Enden des Belagträgers 130 an der rechten und linken Seite angeordnet, wobei die erste Gruppe 111 die am weitesten rechts gelegene Gruppe ist. Der erste Gruppenträger 121, der unterhalb der Belagelemente 111 liegt, ist in dieser Darstellung durch eine gestrichelte Linie gezeigt. Die kreisförmig dargestellten konzentrischen Kreise unterhalb der Belagelemente 111, 112 stellen ein beispielhaftes Kugelgelenk dar, mit welchem die ersten Belagelemente 111 auf dem ersten Gruppenträger 121 fixiert sind. Ein weiteres Kugelgelenk 121b ist an einem zentralen Bereich des ersten Gruppenträgers 121 dargestellt und stellt die Gelenkverbindung zwischen dem ersten Gruppenträger 121 und dem Belagträger 130 dar. Ebenso ist in der Fig. 3 der zweite Gruppenträger 122 gestrichelt dargestellt, der ebenfalls unterhalb der zweiten Gruppe 112 von Belagelementen liegt.

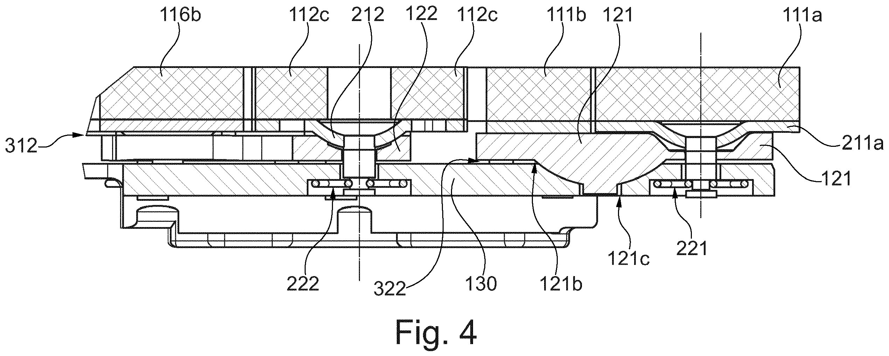

**Fig. 4** zeigt eine Querschnittsansicht entlang der Querschnittslinie A-A aus der Fig. 3. Der Querschnitt A-A geht durch die erste Gruppe 111 von Belagelementen mit dem ersten Gruppenträger 121, durch die zweite Gruppe 112 von Belagelementen mit dem zweiten Gruppenträger 122 und durch einen Teil von der sechsten Gruppe 116 von Belagelementen (siehe auch Fig. 2). Beispielsweise ist ein erstes Element 111a der ersten Gruppe 111 auf dem ersten Gruppenträger 121 durch ein Kugel-Kalotten-Gelenk mit einer ersten Federbefestigung 221 fixiert. Diese und alle anderen Federbefestigungen dienen dazu, eine Vorspannung bereitzustellen, sodass die Belagelemente 111, 112, ... eine ausreichende Elastizität aufweisen und nach einem Verkippen wieder eine Ausgangslage zurückkehren.

Die Fixierung erfolgt beispielsweise über eine erste Befestigungsstruktur 211a, die das erste Belagelement 111a von seiner Rückseite (d.h. gegenüber der Bremsoberfläche) hält. Der erste Gruppenträger 121 ist ebenfalls über ein Kugelgelenk an dem Belagträger 130 befestigt, wobei der Belagträger 130 eine kugelförmige Öffnung zwischen einer äußeren Begrenzung 121b und einer inneren Begrenzung 121c aufweist, die eine Kugel-Kalotten-förmige Ausbuchtung des ersten Gruppenträgers 121 aufnimmt. Wie der Fig. 3 zu entnehmen ist, sind die inneren und äußeren Begrenzungen 121c, 121b Teile von Kreisen, d.h. diese Strukturen sind zirkular symmetrisch.

Ein drittes Belagelement 112c der zweiten Gruppe 112 ist an dem zweiten Gruppenträger 122 wiederum über eine Befestigungsstruktur 212 befestigt. Auch für diese Befestigung ist eine zweite Federbefestigung 222 vorgesehen, die eine Vorspannung für die Befestigung des zweiten Gruppenträgers 122 an dem Belagträger 130 bereitstellt.

Schließlich ist auf der linken Seite des Querschnittes aus der Fig. 4 ein zweites Element 116b der sechsten Gruppe 116 von Belagelementen dargestellt, dessen Gruppenträger in der Querschnittsansicht nicht sichtbar ist.

In dem Ausführungsbeispiel der Fig. 4 ist zwischen dem ersten Gruppenträger 121 und den Belagelementen 111a, 111b der ersten Gruppe 111 kein Spalt ausgebildet, d.h. der erste Gruppenträger 121 steht in direktem Kontakt mit der Befestigungsstruktur 211a für das erste Belagelement 111a der ersten Gruppe 111 (d.h. das erste Belagelement 111a ist kippfest auf dem ersten Gruppenträger 121 angeordnet). Gleiches trifft zu für die anderen Belagelementen der ersten Gruppe 111.

Andererseits ist in diesem Ausführungsbeispiel zwischen dem zweiten Gruppenträger 122 und der Befestigungsstruktur 212 der zweiten Gruppe 112 ein Spalt 312 ausgebildet. Dieser Spalt 312 bewirkt, dass die Belagelemente 112c der zweiten Gruppe 112 sich bis zu einem gewissen Grad (in Abhängigkeit von der Spaltbreite) verkippen können. Die zweite Federbefestigung 222 übt wieder eine Vorspannung aus, die das zweite Belagelement 112 in einer Vorzugsrichtung positioniert.

Zwischen dem ersten Gruppenträger 121 und dem Belagträger 130 kann optional ein weiterer Spalt 322 ausgebildet sein, der eine gelenkartige Lagerung des ersten Gruppenträgers 121 auf dem Belagträger 130 erlaubt, so dass ebenfalls der erste Gruppenträger 121 auf dem Belagträger 130 kippbar fixiert ist. Gleiches trifft zu für die anderen Gruppenträger.

Bei weiteren Ausführungsbeispielen kann das erste Gruppenelement 121 (und ebenso das zweite oder alle weiteren Gruppenelemente) ebenfalls starr auf dem Belagträger 130 fixiert sein. Dies kann dadurch erreicht werden, dass der weitere Spalt 322 zwischen den Gruppenträgern 121, 122, ... und dem Belagträger 130 verschwindet oder möglichst klein gewählt wird, so dass der erste Gruppenträger 121 direkt auf dem Belagträger 130 flächenförmig aufliegt und ein Wippen oder Ankippen des ersten Gruppenträgers 121 verhindert wird.

Die ausgebildeten Spalte 312, 322 auf beiden Seiten der Gruppenträger 121, 122, ... ermöglichen somit, dass die entsprechenden Belagelemente oder Gruppenträger um den Mittelpunkt des Kugel-Kalotten-Gelenks verkippt werden können. Die Belagelemente 111, 112, ... selbst als auch die Gruppenträger 121, 122, ... können daher wippend auf dem Belagträger 130 befestigt sein.

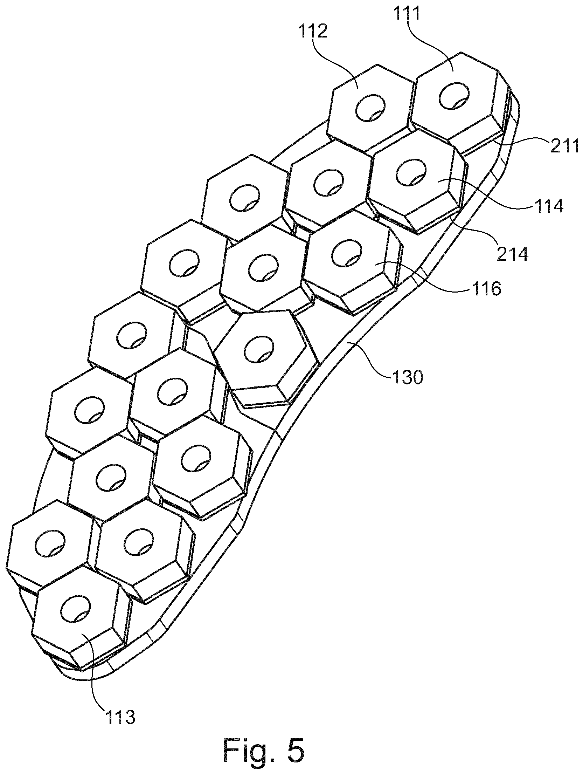

**Fig. 5** zeigt einen Bremsbelag, wobei in diesem Ausführungsbeispiel keine Gruppenträger 121, 122 ausgebildet sind. Die Belagelemente 111, 112, ... sind stattdessen direkt an dem Belagträger 130 befestigt, wobei zumindest ein Belagträger 111 unflexibel bzw. kippfest an dem Belagträger 130 befestigt ist. Optional können jedoch mehrere Belagelemente 111, 113 kippfest oder unflexibel sein. Diese kippfesten oder unflexiblen Belagelemente 111, 113 (wie die zuvor genannten ersten und/oder dritten Belagelemente) können beispielsweise an den Endpositionen des Belagträgers 130 ausgebildet sein. Weitere Belagelemente 112, 114 (wie die zuvor genannten zweiten Belagelemente) können kippbar oder flexibel an dem Belagträger 130 befestigt sein, wobei die weiteren Belagelemente 112, 114 beispielsweise jene Belagelemente sind, die sich zwischen den jeweiligen Enden des Belagträgers 130 befinden. Wie bei dem zuvor genannten Ausführungsbeispiel sind die Belagelemente 111, 112, ... über Befestigungselemente 211, 214 auf dem Belagträger 130 befestigt.

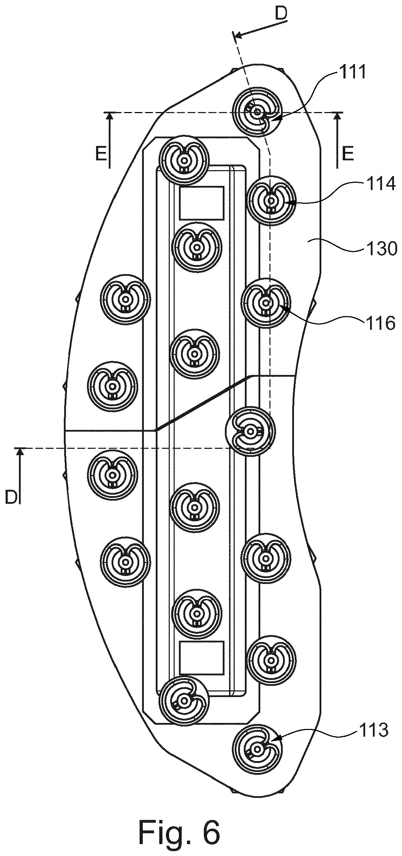

**Fig. 6** zeigt eine Ansicht des Belagträgers 130 von seiner Unterseite, d.h. von der Seite, die der Bremsscheibe und den Belagelementen 111, 112, ... abgewandt ist. An der gezeigten Unterseite sind wiederum an den Endpositionen kippfeste Belagelemente 111, 113 vorgesehen, während die anderen Belagelemente 114, 116, die bezüglich der relativen Bewegungsrichtung des Belagträgers 130 zu der Bremsscheibe zwischen den kippfesten Belagelementen 111 und 113 angeordnet sind, wiederum kippbar an den Belagträger 130 befestigt sind. Die gezeigte Befestigung der Belagelemente 111, 112, ... an der Unterseite erfolgt mittels Federelementen, die im Folgenden detaillierter beschrieben wird.

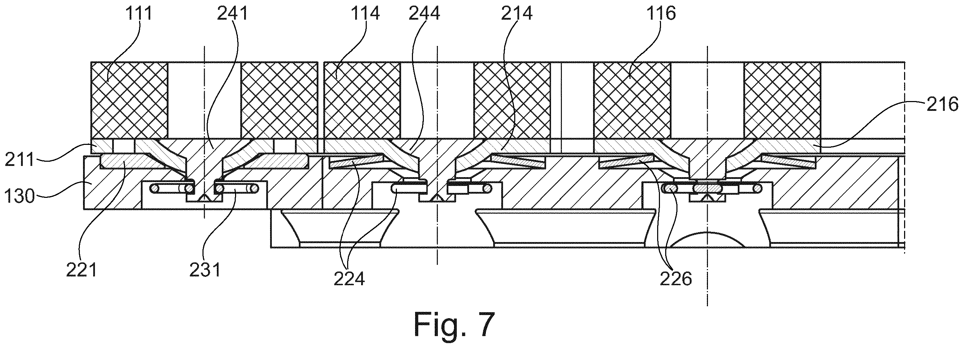

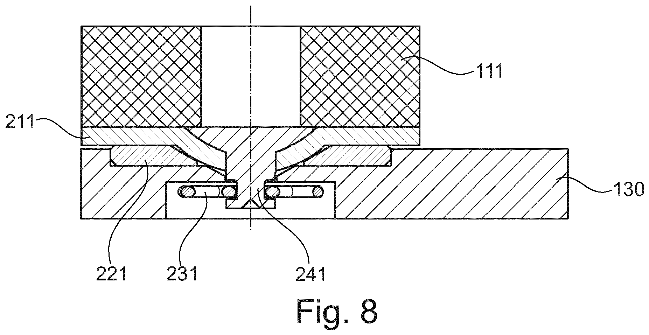

Die **Fig. 7** **und** **8** beziehen sich auf Querschnittsansichten, wobei die Fig. 7 eine Querschnittsansicht entlang der Querschnittslinie D - D und die Fig. 8 eine Querschnittsansicht entlang der Querschnittslinie E - E zeigt (siehe Fig. 6).

Fig. 7 zeigt drei Belagelemente 111, 114, 116, die an dem Belagträger 130 über Befestigungselemente 211, 214, 216 befestigt sind. In dem Belagträger 130 sind Öffnungen an jeder Position der drei Belagelemente 111, 114, 116 vorgesehen, durch welche Fixierungsstrukturen 241, 244, ... hindurchgeführt sind. Die Fixierungsstrukturen 241, 244, ... können beispielsweise bolzenförmig gestaltet sein, so dass deren Verbreiterungen die Befestigungselemente 211, 214, 216 halten und die stabförmigen Abschnitte sich durch den Belagträger 130 erstrecken und von der Gegenseite durch Federbefestigungen 231, 224, 226 an dem Belagträger 130 gehalten werden.

Die erste Fixierungsstruktur 241 dient der Fixierung des ersten Belagelementes 111 und fixiert das erste Befestigungselement 211 kippfest oder unflexibel an dem Belagträger 130. Dazu ist das erste Befestigungselement 211 auf den Belagträger aufliegend befestigt, wobei ein optionales Zwischenelement 221 zwischen dem ersten Befestigungselement 211 und dem Belagträger 130 ausgebildet ist. Dieses Zwischenelement 211 dient beispielsweise der Lagerung des optional kugelförmig gestalteten Befestigungselementes 211 in einer optional Kalotten-förmigen Vertiefung des Zwischenelementes 211. Dadurch kann beispielsweise eine teilweise Drehung ermöglicht werden. Insbesondere braucht zwischen dem ersten Belagelement 111 und dem Zwischenelement 221 kein Spalt ausgebildet zu sein, so dass das erste Belagelement 111 kippfest oder unflexibel auf dem Belagträger 130 befestigt ist.

Im Vergleich hierzu ist das vierte Belagelement 114 und das sechste Belagelement 116 kippbar auf dem Belagträger 130 befestigt. Dazu ist das vierte Befestigungselement 214 wie das erste Belagelement 111 beispielsweise über eine Fixierungsstruktur 244 an dem Belagträger 130 durch eine Federstruktur 224 federbar befestigt. Im Unterschied zu dem ersten Befestigungselement 211 ist zwischen dem Befestigungselement 214 des vierten Belagelementes 114 und dem Belagträger 130 ein Spalt ausgebildet. Optional weist die Federhalterung 224 auf der den Belagelementen zugewandten Seite des Belagträgers 130 eine blattfederartiges Zwischenelement auf, die das vierte Belagelement 114 in einem bestimmten Abstand von dem Belagträger 130 vorspannt.

Das sechste Belagelement 116 ist in der gleichen Weise an dem Belagträger 130 fixiert, wie das vierte Belagelement 114, d.h. auch das sechste Belagelement 116 wird durch Federhalterung 216 in einem vorbestimmten Abstand von dem Belagträger 130 gehalten.

Daher ist in dem gezeigten Ausführungsbeispiel lediglich das erste Belagelement 111 ohne einen Zwischenraum direkt auf dem Belagträger 130 oder dem optional ausgebildeten Zwischenelement 221 befestigt, während das vierte und das sechste Belagelement 114, 116 durch eine Federstruktur 224, 226 kippbar auf dem Belagträger 130 gehalten wird. Der Spalt zwischen den Befestigungselementen 214, 216 und dem Belagträger 130 kann dabei in ähnlicher Weise ausgebildet werden, wie der Spalt 312 oder der weitere Spalt 322 in den Ausführungsbeispielen aus der Fig. 4.

Fig. 8. zeigt eine vergrößerte Querschnittsansicht durch das erste Belagelement 111. Aus dieser Darstellung ist klar ersichtlich, dass das erste Belagelement 111 mit seinem Befestigungselement 211 direkt auf den Belagträger 130 aufliegt bzw. zwischen dem Belagträger 130 und dem ersten Befestigungselement 211 ein Zwischenelement 221 ausgebildet ist. Das Zwischenelement 221 dient vor allem der Lagerung, erlaubt aber kein Verkippen des ersten Belagelementes 111. Die Halterung des ersten Belagelementes 111 erfolgt wieder über eine mit der Federbefestigung 231 befestigte Bolzenhalterung 241, die sich hinter einer Öffnung des Befestigungselementes 211 verbreitert und somit eine zuverlässige Halterung des ersten Belagelementes 111 sicherstellt.

Die gezeigten Ausführungsbeispiele mit Gruppenträgern (Fig. 2-4) oder ohne Gruppenträger (Fig. 5-8) sind nicht als Alternativen aufzufassen, sondern können ebenfalls miteinander kombiniert werden. Daher können einige Gruppenträger 121, 122, ... aus dem Bremsbelag der Fig. 2 weggelassen werden, wobei die entsprechenden Belagelemente direkt kippbar oder kippfest auf dem Belagträger befestigt werden können. Gleiches gilt für das Ausführungsbeispiel aus der Fig. 5, bei dem einige Belagelemente gruppiert und mittels einem oder mehreren Gruppenträgern auf dem Belagträger 130 befestigt werden können.

Die Reibmaterialien der verschiedenen Belagelemente 111, 112, 113, ... können gleich oder auch unterschiedlich sein. So ist es beispielsweise möglich, dass das erste Belagelement 111 und das dritte Belagelement 113, die kippfest an dem Belagträger 130 befestigt sind, ein anderes Reibmaterial aufweisen, als die übrigen Belagelemente 112, 114, ..., die kippbar auf dem Belagträger 130 befestigt sind. Beispielsweise kann das Reibmaterial der kippfesten Belagelemente 111, 113 eine bessere Verschleißperformance aufweisen. Optional ist es ebenfalls möglich, dass Abstreifer vorgesehen sind, die dazu dienen, eine Wasser- oder Eisschicht auf der Bremsscheibe zu entfernen, um somit einen besseren Kontakt zwischen den Belagelementen 111, 112, 113, ... und der Bremsscheibe sicherzustellen. Die Abstreifstruktur kann beispielsweise eine Selikonlippe oder eine ähnliche Struktur umfassen, die geeignet ist, um Wasser oder Eis von der Bremsscheibe abzustreifen. Mögliche Reibmaterialien sind: sogenannte halb-metallische Reibmaterialien (mehr als 30% Metall) oder kaummetallische Reibmaterialien (weniger als 30% Metall), organische oder keramische Reibmaterialien oder eine Kombination dieser Materialien. Ohne die Erfindung darauf einzuschränken können für die kippfesten Belagelement 111, 113 beispielsweise kaummetallische oder keramische Reibmaterialien genutzt werden.

Ausführungsbeispiele weisen die folgenden Vorteile auf. Beispielsweise können die starr-gelagerten Belagelemente 111, 113 besser Wasser oder eine Eisschicht von der Oberfläche der Bremsscheibe abschaben als gelenkig gelagerte Belagelemente 112, 114, 115, 116. Die gelenkig gelagerten Belagelemente 112, 114, 115, 116 neigen dazu, bei einem Widerstand auf der Bremsscheibe zu verkanten oder zu verkippen. Kommt es beispielsweise bei tiefen Temperaturen und hoher Luftfeuchtigkeit zur Bildung einer Eisschicht auf der Reibfläche der Bremsscheibe, kann diese daher durch die starr-gelagerten Belagelemente 111, 113, die beidseitig der beweglich gelagerten Belagelemente 112, 114, 115, 116 angeordnet sind, schneller abgetragen werden. Dadurch wird das Bremsmoment schneller aufgebaut. Außerdem verbessert sich das Bremsverhalten bei Nässe, da ein "Aufschwimmen" des Belages durch eine lokal höhere Flächenpressung reduziert wird.

### BEZUGSZEICHENLISTE

- 111, 112,: Belagelemente
- 121, 122,: Gruppenträger
- 130: Belagträger
- 211, 212, 216: Befestigungselemente
- 221, 222, 224, 226: Federbefestigungen
- 312: Spalt
- 322: weiterer Spalt

## Patentansprüche

1. Bremsbelag für eine Scheibenbremse, wobei der Bremsbelag eine Verteilung von Belagelementen (111, 112, ....), die an einem Belagträger (130) oder gruppenweise an Gruppenträgern (121, 122, ...) angeordnet sind, aufweist und die Gruppenträger (121, 122, ...) an dem Belagträger (130) befestigt sind, wobei Positionen der Belagelemente (111, 112, ...) oder der Gruppenträger (121, 122, ...) über ihre Masseschwerpunkte eindeutig einer Position auf dem Belagträger (130) zugeordnet werden,
**dadurch gekennzeichnet, dass**
die Belagelemente (111, 112, ...) mehrere erste Belagelemente (111) und zweite Belagelemente (112) aufweisen, wobei die ersten Belagelemente (111) kippfest und/oder unflexibel an einem ersten Gruppenträger (121) oder an dem Belagträger (130) angeordnet sind und die zweiten Belagelemente (112) kippbar und/oder flexibel an einem zweiten Gruppenträger (122) oder dem Belagträger (130) angeordnet sind.

2. Bremsbelag nach Anspruch 1,
**dadurch gekennzeichnet, dass**
der erste Gruppenträger (121) an einer Endposition des Belagträgers (130) befestigt ist, wobei von allen Positionen der Gruppenträger auf dem Belagträger (130) die Endposition eine erste Position oder letzte Position auf dem Belagträger (130) bezüglich einer relativen Bewegung zwischen einer Bremsscheibe der Scheibenbremse und dem Bremsbelag (130) ist.

3. Bremsbelag nach Anspruch 2,
**dadurch gekennzeichnet, dass**
die Belagelemente (111, 112, ...) zumindest ein drittes Belagelement (113) und die Gruppenträger (121, 122, ...) einen dritten Gruppenträger (123) aufweisen, wobei die dritten Belagelemente (113) kippfest an dem dritten Gruppenträger (123) angeordnet sind und der dritte Gruppenträger (123) an einer weiteren Endposition des Belagträgers (130), die der Endposition gegenüber liegt, angeordnet ist.

4. Bremsbelag nach einem der vorhergehenden Ansprüche,
**dadurch gekennzeichnet, dass**
zwischen den zweiten Belagelementen (112) und dem zweiten Gruppenträger (122) ein Spalt ausgebildet ist, um ein Verkippen der zweiten Belagelemente (112) zu ermöglichen.

5. Bremsbelag nach einem der vorhergehenden Ansprüche,
**dadurch gekennzeichnet, dass**
die ersten Belagelemente (111) spaltfrei auf dem ersten Gruppenträger (121) liegen, um ein Verkippen zu verhindern.

6. Bremsbelag nach einem der vorhergehenden Ansprüche,
**dadurch gekennzeichnet, dass**
der erste, zweite und dritte Gruppenträger (121, 122, ...) Teil einer Vielzahl von Gruppenträgern sind, von denen zumindest ein Gruppenträger kippfest oder kippbar auf dem Belagträger (130) befestigt ist.

7. Bremsbelag nach einem der vorhergehenden Ansprüche,
**dadurch gekennzeichnet, dass**
alle Belagelemente (111a, 111b, 111c, 112a, 112b, 112c) einer Gruppe von Belagelementen (111, 112) kippfest oder kippbar auf dem jeweiligen Gruppenträger (121, 122) angeordnet sind.

8. Bremsbelag nach einem der vorhergehenden Ansprüche,
**dadurch gekennzeichnet, dass**
die Belagelemente (111, 112, ...) auf den jeweiligen Gruppenträgern (121, 122, ...) drehbar und/oder die Gruppenträger (121, 122, ....) drehbar auf dem Belagträger (130) angeordnet sind.

9. Bremsbelag einem der vorhergehenden Ansprüche,
**dadurch gekennzeichnet, dass**
die Belagelemente (111, 112, ...) drehfest auf den jeweiligen Gruppenträgern (121, 122, ...) angeordnet sind, insbesondere sind die Belagelemente (111, 112, ...) als Vielecke ausgebildet sind, wobei zumindest ein Teil der Belagelemente (111, 112, ...) mit zumindest einer ihrer Seitenkanten aneinander stoßen, um dadurch ein Verdrehen zu verhindern.

10. Bremsbelag nach einem der vorhergehenden Ansprüche,
**dadurch gekennzeichnet, dass**
zumindest ein Teil der Belagelemente (111, 112, ...) über Kugelgelenke an den jeweiligen Gruppenträger (121, 122, ...) befestigt sind und/oder zumindest ein Teil der Gruppenträger (121, 122, ...) über Kugelgelenke an dem Belagträger (130) befestigt sind, wobei die Kugelgelenke eine Verdrehung um eine Drehachse und/oder ein Kippen bezüglich der Drehachse erlauben, wobei die Drehachse senkrecht auf der Verteilung der Belagelemente (111, 112, ...) steht.

11. Bremsbelag nach einem der vorhergehenden Ansprüche,
**dadurch gekennzeichnet, dass**
die Belagelemente (111, 112, ...) mittels Federn elastisch gegenüber den jeweiligen Gruppenträgern (121, 122, ...) vorgespannt sind.

12. Bremsbelag nach einem der vorhergehenden Ansprüche,
**dadurch gekennzeichnet, dass**
die Belagelemente (111, 112, ...) Befestigungselement (211, 212, ...) aufweisen, die einen kugelkalottenförmigen Abschnitt umfassen, um ein kugelgelenkförmige Verbindung zu den jeweiligen Gruppenträger (121, 122, ...) bereitzustellen.

13. Bremsbelag nach einem der vorhergehenden Ansprüche,
**dadurch gekennzeichnet, dass**
die ersten Belagelemente (111) ein anderes Reibmaterial aufweisen, als die zweiten Belagelemente (112).

14. Scheibenbremse mit einem Bremsbelag nach einem der Ansprüche 1 bis 13.

15. Schienenfahrzeug mit einer Scheibenbremse nach Anspruch 14.

## Claims

1. Brake pad for a disc brake, wherein the brake pad has a distribution of pad elements (111, 112, ....) which are arranged in groups on a backing plate (130) or on group supports (121, 122, ...), and the group supports (121, 122, ...) are attached to the backing, plate (130), wherein the positions of the pad elements (111, 112, ....) or the group supports (121, 122, ...) are definitely assigned to a position on the backing plate (130) by way of their centres of gravity
**characterised in that**
the pad elements (111, 112, ...) have one or more first pad elements (111) and second pad elements (112), wherein the first pad elements (111) are arranged in a non-tiltable and/or inflexible fashion on a first group support (121) or on the backing plate (130), and the second pad elements (112) are arranged in a tiltable and/or flexible fashion on a second group support (122) or on the backing pate (130).

2. Brake pad according to claim 1,
**characterised in that**
the first group support (121) is attached to an end position of the backing plate (130), wherein of all the positions of the group supports on the backing plate (130) the end position is a first position or last position on the backing plate (130) with respect to a relative movement between a brake disc or disc brake and the brake pad (130).

3. Brake pad according to claim 2,
**characterised in that**
the pad elements (111, 112, ...) have at least a third pad element (113), and the group supports (121, 122, ...) have a third group support (123), wherein the third pad elements (113) are arranged in a non-tiltable fashion on the third group support (123), and the third group support (123) is arranged at a further end position of the backing (130) which lies opposite the end position.

4. Brake pad according to any of the preceding claims,
**characterised in that**
a gap is formed between the second pad elements (112) and the second group support (122) in order to permit tilting of the second pad elements (112).

5. Brake pad according to any of the preceding claims,
**characterised in that**
the first pad elements (111) lie in a gap-free fashion on the first group support (121) in order to prevent tilting.

6. Brake pad according to any of the preceding claims,
**characterised in that**
the first, second and third group supports (121, 122, ...) are part of a multiplicity of group supports, at least one group support of which is attached in a non-tiltable fashion or tiltable fashion on the backing plate (130).

7. Brake pad according to any of the preceding claims,
**characterised in that**
all pad elements (111a, 111b, 111c, 112a, 112b, 112c) of a group of pad elements (111, 112) are arranged in a non-tiltable or tiltable fashion on the respective group support (121, 122).

8. Brake pad according to any of the preceding claims,
**characterised in that**
the pad elements (111, 112, ...) are arranged on the respective group supports (121, 122, ...) in a rotatable fashion and/or the group supports (121, 122, ....) are arranged in a rotatable fashion on the backing plate (130).

9. Brake pad according to any of the preceding claims,
**characterised in that**
the pad elements (111, 112, ...) are arranged in a non-rotatable fashion on the respective group supports (121, 122, ...), the pad elements (111, 112, ...) being in particular embodied as polygons, wherein at least some of the pad elements (111, 112, ...) adjoin one another with at least one of their side edges in order in this way to prevent rotation.

10. Brake pad according to any of the preceding claims,
**characterised in that**
at least some of the pad elements (111, 112, ...) are attached to the respective group supports (121, 122, ...) by means of ball joints, and/or at least some of the group supports (121, 122, ...) are attached to the pad support (130) by means of ball joints, wherein the ball joints permit rotation about a axis pf rotation and/or tilting with respect to the axis of rotation, wherein the axis of rotation is perpendicular with respect to the distribution of the pad elements (111, 112, ...).

11. Brake pad according to any of the preceding claims,
**characterised in that**
the pad elements (111, 112, ...) are preloaded elastically in relation to the respective group supports (121, 122, ...) by means of springs.

12. Brake pad according to any of the preceding claims,
**characterised in that**
the pad elements (111, 112, ...) have fastening elements (211, 212, ...) which comprise a spherical-cap-shaped section in order to make available a spherical-joint-shaped connection to the respective group supports (121, 122, ...).

13. Brake pad according to any of the preceding claims,
**characterised in that**
the first pad elements (111) have a different frictional material than the second pad elements (112).

14. Disc brake having a brake pad according to any of claims 1 to 13.

15. Rail vehicle having a disc brake according to claim 14.

## Revendications

1. Garniture de frein d'un frein à disque, dans lequel la garniture de frein a une répartition d'éléments (111, 112, ...) de garniture, qui sont montés sur un support (130) de garniture ou groupe par groupe sur des supports (121, 122, ...) de groupe et les supports (121, 122, ...) de groupe sont fixés au support (130) de garniture, dans lequel des positions des éléments (111, 112, ...) de garniture ou des supports (121, 122, ...) de groupe sont associées par leurs centres de gravité de masse d'une manière univoque à une position sur le support (130) de garniture,
**caractérisée en ce que**
les éléments (111, 112, ...) de garniture ont plusieurs premiers éléments (111) de garniture et deuxièmes éléments (112) de garniture, dans lequel les premiers éléments (111) de garniture sont montés de manière à ne pas pouvoir basculer et/ou de manière non souple sur un premier support (121) de groupe ou sur le support (130) de garniture et les deuxièmes éléments (112) de garniture sont montés de manière à pouvoir basculer et/ou de manière souple sur un deuxième support (122) de groupe ou sur le support (130) de garniture.

2. Garniture de frein suivant la revendication 1,
**caractérisée en ce que**
le premier support (121) de groupe est fixé à une position d'extrémité du support (130) de garniture, dans lequel de toutes les positions des supports de groupe sur le support (130) de garniture, la position d'extrémité est une position première ou une position dernière sur le support (130) de garniture en ce qui concerne un déplacement relatif entre un disque du frein à disque et la garniture (130) de frein.

3. Garniture de frein suivant la revendication 2,
**caractérisée en ce que** les éléments (111, 112, ...) de garniture ont au moins un troisième élément (113) de garniture et les supports (121, 122, ...) de groupe, un troisième support (123) de groupe, dans lequel les troisièmes éléments (113) de garniture sont montés de manière à ne pas pouvoir basculer sur le troisième support (123) de groupe et le troisième support (123) de groupe est monté à une autre position d'extrémité du support (130) de garniture, qui est en face de la position d'extrémité.

4. Garniture de frein suivant l'une des revendications précédentes,
**caractérisée en ce que**
entre les deuxièmes éléments (112) de garniture et le deuxième support (122) de groupe, il est constitué un intervalle pour rendre possible un basculement des deuxièmes éléments (112) de garniture.

5. Garniture de frein suivant l'une des revendications précédentes,
**caractérisée en ce que**
les premiers éléments (111) de garniture reposent sans intervalle sur le premier support (121) de groupe pour empêcher un basculement.

6. Garniture de frein suivant l'une des revendications précédentes,
**caractérisée en ce que**
le premier, deuxième et troisième supports (121, 122, ...) de groupe font partie d'une pluralité de supports de groupe, dont au moins un support de groupe est fixé de manière à ne pas pouvoir basculer ou de manière à pouvoir basculer sur le support (130) de garniture.

7. Garniture de frein suivant l'une des revendications précédentes,
**caractérisée en ce que**
tous les éléments (111a, 111b, 111c, 112a, 112b, 112c) de garniture d'un groupe d'éléments (111, 112) de garniture sont montés de manière à ne pas pouvoir basculer ou de manière à pouvoir basculer sur le support (121, 122) de groupe respectif.

8. Garniture de frein suivant l'une des revendications précédentes,
**caractérisée en ce que**
les éléments (111, 112, ...) de garniture sont montés tournants sur les supports (121, 122, ...) de groupe respectifs et/ou les supports (121, 122, ...) de groupe sont montés tournants sur le support (130) de garniture.

9. Garniture de frein suivant l'une des revendications précédentes,
**caractérisée en ce que**
les éléments (111, 112, ...) de garniture sont montés d'une manière fixe en rotation sur les supports (121, 122, ...) de groupe respectifs, les éléments (111, 112, ...) de garniture étant constitués en particulier sous la forme de polygones, dans lequel au moins une partie des éléments (111, 112, ...) de garniture sont contigus par au moins l'un de leurs bords latéraux, afin d'empêcher ainsi une rotation.

10. Garniture de frein suivant l'une des revendications précédentes,
**caractérisée en ce qu'**au moins une partie des éléments (111, 112, ...) de garniture sont fixés au support (121, 122, ...) de groupe respectif par des rotules et/ou au moins une partie des supports (121, 122, ...) de groupe sont fixés au support (130) de garniture par des rotules, dans lequel les rotules permettent une rotation autour d'un axe de rotation et/ou un basculement par rapport à l'axe de rotation, l'axe de rotation étant perpendiculaire à la répartition des éléments (111, 112, ...) de garniture.

11. Garniture de frein suivant l'une des revendications précédentes,
**caractérisé en ce que**
les éléments (111, 112, ...) de garniture sont précontraints élastiquement par rapport aux supports (121, 122, ...) de groupe respectifs au moyen de ressorts.

12. Garniture de frein suivant l'une des revendications précédentes,
**caractérisé en ce que**
les éléments (111, 112, ...) de garniture ont des éléments (211, 212, ...) de fixation, qui comprennent une partie en forme de calotte sphérique, afin de donner une liaison en forme de rotule avec les supports (121, 122, ...) de groupe respectif.

13. Garniture de frein suivant l'une des revendications précédentes,
**caractérisé en ce que**
les premiers éléments (111) de garniture ont un matériau de friction autre que les deuxièmes éléments (112) de garniture.

14. Frein à disque ayant une garniture de frein suivant l'une des revendications 1 à 13.

15. Véhicule ferroviaire ayant un frein à disque suivant la revendication 14.
